# EUROPÄISCHE PATENTSCHRIFT

(11) **EP 0 465 927 B1**
(45) Veröffentlichungstag und Bekanntmachung des Hinweises auf die Patenterteilung: **09.11.1994**
(21) Anmeldenummer: 91110521.1
(22) Anmeldetag: 26.06.1991
(51) Int. Cl.: C08L 25/12, C08L 51/04, C08K 13/02

(54) **Chlor- und brom-freie, flammfest ausgerüstete ABS-Formmassen**
Chlor- and brom-free flame-retardant ABS-moulding compositions
Masse de moulage d'ABS ignifuge exempte de chlore et de brome

(30) Priorität: 05.07.1990 DE 4021501
(43) Veröffentlichungstag der Anmeldung: 15.01.1992
(73) Patentinhaber: BASF Aktiengesellschaft, 67063 Ludwigshafen (DE)
(72) Erfinder: Seitz, Friedrich, Dr., W-6701 Friedelsheim (DE); Bueschl, Rainer, Dr., W-6701 Roedersheim-Gronau (DE); Gareiss, Brigitte, Dr., W-6700 Ludwigshafen (DE); Guentherberg, Norbert, Dr., W-6500 Mainz 22 (DE); Muehlbach, Klaus, Dr., W-6148 Heppenheim (DE)

(56) Entgegenhaltungen:
- FR-A- 2 012 186

## Beschreibung

Üblicherweise werden ABS-Formmassen durch Zusatz halogenhaltiger organischer Verbindungen, häufig in Kombination mit einem Synergisten wie Antimonoxid flammfest ausgerüstet. Die Verwendung halogenhaltiger Hilfsmittel wird jedoch von vielen Anwendern abgelehnt, z.B. weil diese Hilfsmittel die Formkorrosion fördern.

Von den Versuchen, ABS-Formmassen ohne Zusatz halogenhaltiger Verbindungen flammfest auszurüsten, sei hier insbesondere die Verwendung von rotem Phosphor als Flammschutzmittel genannt. Der Zusatz von rotem Phosphor zu ABS-Formmassen ist z.B. in folgenden Patentschriften beschrieben:
(1) FR 20 12 186
(2) WO 85 05 626
(3) JA 6 11 26 161
(4) JA 6 12 91 643.

(1) beschreibt das Dispergieren von rotem Phosphor in einem Latex aus Styrol-Acrylnitril-Copolymer, die Mischung dieser Dispersion mit einem ABS-Latex und die gemeinsame Fällung.
(2) beschreibt eine Mischung aus einer stickstoffhaltigen Verbindung, bevorzugt Melamin oder einem Melaminsalz, rotem Phosphor und einem Polyol als Flammschutzmittel für Polyolefine.
(3) beschreibt den Zusatz von rotem Phosphor, Melamin und einem Silikat als Füllstoff für ABS-Formmassen, die dadurch flammfest werden.
In (4) wird für die Flammfestausrüstung von ABS der Zusatz von rotem Phosphor, Melamin und einem thermisch vernetzbaren Harz empfohlen.

Die bekannten Mischungen sind jedoch teils in der Herstellung schwierig, teils führen die Zusätze zu einer drastischen Verschlechterung anderer Eigenschaften, z.B. der Zähigkeit, teils werden die Forderungen nach Nichtentflammbarkeit nicht vollkommen erfüllt.

Aufgabe der vorliegenden Erfindung war die Bereitstellung einer chlor- und brom-freien ABS-Formmasse, die nicht-entflammbar im Sinn der Underwriters Laboratories Specification UL 94 ist, leicht herzustellen ist und ausreichend mechanische Eigenschaften gewährleistet.

Die Aufgabe wird gelöst durch eine Mischung aus
- A:: mindestens 35 Gew.-% eines Styrol-Acrylnitril-Copolymerisates A;
- B:: 5 - 60 Gew.-% eines Pfropfpolymerisats B, hergestellt durch Pfropfung einer Mischung aus Styrol und Acrylnitril auf einen Dien- oder Acrylatkautschuk;
- C:: 5 - 25 Gew.-% rotem Phosphor C;
- D:: 5 - 25 Gew.-% einer stickstoffhaltigen Verbindung D;
- E:: 0,05 - 1 Gew.-% eines teilchenförmigen Tetrafluorethylen-Polymerisats E sowie, wenn gewünscht
- F:: bis zu 10 Gew.-% einer Phosphorverbindung F.

Zu den Bestandteilen der Mischung ist im einzelnen folgendes zu sagen:

Das Styrol-Acrylnitril-Polymerisat A enthält 15 bis 40 Gew.-%, bevorzugt 20 bis 35 Gew.-% Acrylnitril. Es kann durch Copolymerisation in Masse, Lösung, Suspension oder wäßriger Emulsion hergestellt werden. Das Styrol-Acrylnitril-Copolymerisat A hat vorzugsweise eine Viskositätszahl von 40 bis 100, insbesondere von 50 bis 80. Die Bestimmung der Viskositätszahl erfolgt analog DIN 53 726; dabei werden 0,5 g Material in 100 ml Dimethylformamid gelöst.

Pfropfpolymerisate B im Sinne der Erfindung sind insbesondere Emulsionspfropfpolymerisate von Gemischen aus 10 bis 40 Gew.-% Acrylnitril und 90 bis 60 Gew.-% Styrol auf teilchenförmige, wenigstens partiell vernetzte Dienkautschuke oder Alkylacrylatkautschuke einer mittleren Teilchengröße (Gewichtsmittel) von 50 bis 1000 nm. Bevorzugte Dienkautschuke sind Polybutadien, Polyisopren und Butadiencopolymere mit bis zu 50 Gew.-% copolymerisierten Monomeren wie Acrylnitril, Styrol, Methylmethacrylat oder Butylacrylat. Die Pfropfpolymerisate B enthalten bevorzugt 40 bis 80 Gew.-%, insbesondere 50 bis 70 Gew.-% Dienkautschuk. Die Herstellung solcher Pfropfpolymerisate ist bekannt und kann z.B. durch radikalische Polymerisation eines Monomerengemisches aus Styrol und Acrylnitril in Gegenwart eines in wäßriger Emulsion vorliegenden teilchenförmigen Dienkautschuks erfolgen. Geeignete Pfropfpolymerisate B sind auch Pfropfpolymerisate von Styrol und Acrylnitril auf Acrylatkautschuke, die durch Polymerisation von Acrylsäurealkylestern mit 1 bis 10 Kohlenstoffatomen im Alkylrest, insbesondere Butylacrylat und Ethylhexylacrylat erhalten worden waren. Die als Pfropfgrundlage geeigneten Acrylatkautschuke können Comonomere wie Styrol, Butadien oder Methylmethacrylat in Mengen bis zu 40 Gew.-% einpolymerisiert enthalten. Die als Pfropfgrundlage geeigneten Acrylatkautschuke sind partiell vernetzt; die Vernetzung wird durch radikalische Emulsionspolymerisation entsprechender Monomerengemische in Gegenwart eines copolymerisierbaren, mehrfunktionellen, die Vernetzung bewirkenden Monomeren bewirkt. Geeignete Vernetzungsmonomere sind beispielsweise Divinylbenzol, Diallylmaleat, Diallylfumarat oder Diallylphthalat. Als besonders günstiges Vernetzungsmonomeres hat sich der Acrylsäureester des Tricyclodecenylalkohols erwiesen (vgl. DE-PS 12 60 135). Die Pfropfpolymerisate B enthalten bevorzugt 40 bis 80 Gew.-%, insbesondere 50 bis 70 Gew.-%, Acrylatkautschuk. Komponente B ist in Mengen von 5 - 60, vorzugsweise von 15 - 50 Gew.-% enthalten.

Die erfindungsgemäßen Formmassen enthalten 5 - 25 Gew.-%, bevorzugt 5 - 15 Gew.-%, roten Phosphor.

Der rote Phosphor kann direkt, wie er kommerziell erhältlich ist eingesetzt werden. Es sind jedoch auch Produkte im Handel, in denen der rote Phosphor oberflächlich mit niedermolekularen flüssigen Substanzen wie Silikonöl, Paraffinöl oder Estern der Phthalsäure, der Adipinsäure oder Polymeren oder Oligomeren beschichtet ist. Alle diese Produkte sind erfindungsgemäß verwendbar.

Die mittlere Teilchengröße d₅₀ (Zahlenmittelwert) der Phosphorpartikel liegt bevorzugt im Bereich von 0,0001 bis 0,5, insbesondere von 0,001 bis 0,2 mm.

Die erfindungsgemäßen Formmassen enthalten ferner 5 - 25 Gew.-%, bevorzugt 5 - 20 Gew.-% einer stickstoffhaltigen organischen Verbindung D. Bevorzugte stickstoffhaltige Verbindungen D sind Triazinderivate. Besonders bevorzugt ist Melamin und seine Salze wie Melaminphosphat und Melaminborat. Auch Melamincyanurat ist sehr gut geeignet.

Weitere geeignete stickstoffhaltige Verbindungen D sind Polyamide. Teilkristalline oder amorphe Polyamide mit einem Molekulargewicht (Gewichtsmittelwert) von mindestens 5000, wie sie z.B. in den DE-OSen 20 71 250, 20 71 251, 21 30 523, 21 30 948, 22 41 322, 23 12 966, 25 12 606 und 33 93 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylauryllactam sowie Polyamide die durch Umsetzung von Dicarbonsäuren mit Diaminen erhalten werden.

Als Dicarbonsäuren sind Alkandicarbonsäuren mit 4 bis 12, insbesondre 6 bis 10 Kohlenstoffatomen und aromatische Dicarbonsäuren einsetzbar. Hier seien nur Adipinsäure, Azelainsäure, Sebacinsäure, Dodecandisäure und Tere- sowie Isophthalsäure genannt.

Als Diamine eignen sich besonders Alkandiamine mit 4 bis 14, insbesondere 4 bis 10 Kohlenstoffatomen sowie m-Xylylendiamin, Di-(4-aminophenyl)-methan, Di-(4-aminocyclohexyl)-methan, 2,2-Di-(4-aminophenyl)-propan oder 2,2-Di-(4-aminocyclohexyl)-propan. Weiterhin sind Polyamide, die durch Copolymerisation zweier oder mehrerer der vorgenannten Monomeren erhältlich sind, oder Mischungen mehrerer Polyamide geeignet.

Die relative Viskosität der Polyamide liegt im allgemeinen im Bereich von 2,2 bis 4,5, gemessen in 1 gew.-%iger Lösung in 96 gew.-%iger Schwefelsäure bei 25°C.

Verfahren zur Herstellung solcher Polyamide wie auch derartige Polyamide selbst sind bekannt.

Erfindungsgemäß geeignete Tetrafluorethylen-Polymerisate E sind Polymere mit Fluorgehalten zwischen 65 und 76 Gew.-%, bevorzugt zwischen 70 und 76 Gew.-%. Neben Homopolymerisaten des Tetrafluorethylens kommen hierfür auch Copolymere des Tetrafluorethylens mit anderen fluorhaltigen Monomeren wie z.B. Hexafluorpropen oder Copolymere des Tetrafluorethylens mit geringen Mengen fluorfreier copolymerisierbarer ethylenisch ungesättigter Monomerer in Betracht. Komponente E ist in Mengen von 0,05 - 1, bevorzugt von 0,1 - 0,5 Gew.-% enthalten. Die Herstellung von Tetrafluorethylen-Polymerisaten ist bekannt und z.B. in Houben-Weyl, Methoden der organischen Chemie, Band 14/1, Seiten 842-849, Stuttgart 1961, beschrieben.

Als Phosphorverbindungen F sind Verbindungen der allgemeinen Formel 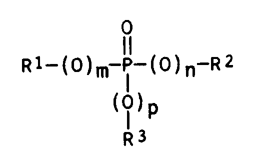
geeignet, worin R¹, R² und R³ unabhängig voneinander Alkyl oder Aryl sind und m, n und p unabhängig voneinander den wert Null oder 1 haben. Beispiele für R¹, R² und R³ sind Methyl, Ethyl, Butyl, Phenyl oder Kresyl. Besonders geeignete Phosphorverbindungen sind Triarylphosphate und Triarylphosphinoxide wie z.B. Triphenylphosphat, Trikresylphosphat und Triphenylphosphinoxid. Die Phosphorverbindung F kann, wenn gewünscht, in einer Menge bis zu 10 Gew.-%, insbesondere von 0,5 bis 5 Gew.-%, bezogen auf das Gesamtgewicht der erfindungsgemäßen Mischung eingesetzt werden.

Die erfindungsgemäßen Formmassen können weiter bis zu 10 Gew.-%, bevorzugt bis zu 5 Gew.-% eines Terpolymeren aus Styrol, Acrylnitril und Maleinsäureanhydrid enthalten. Bevorzugt werden Terpolymere mit einem Acrylnitril-Anteil von 15 - 40 Gew.-%, insbesondere von 20 - 35 Gew.-% und einem Maleinsäureanhydrid-Anteil von 0,1 - 10 Gew.-%, insbesondere von 0,5 - 5 Gew.-%.

Die Herstellung der erfindungsgemäßen Mischung kann so erfolgen, daß die Komponenten A bis D und gegebenenfalls F, gegebenenfalls unter Verwendung weiterer Zusatz- und Hilfsstoffe, zunächst bei Raumtemperatur mit einer wäßrigen Dispersion der Komponente E vorgemischt werden. Soweit die Komponenten A und B als wäßrige Emulsion vorliegen, werden sie vor der Abmischung aus dem Latex durch Koagulation isoliert. Die endgültige Abmischung erfolgt dann vorzugsweise durch gemeinsames Extrudieren.

Günstig ist es, zunächst eine Abmischung aus Komponente A und einem Tetrafluorethylen-Polymerisat E herzustellen und die erhaltene Mischung dann in einem weiteren Verfahrensschritt mit den übrigen Komponenten abzumischen. Besonders bevorzugt werden nur die Komponenten A bis D und ggf. F vorgemischt und anschließend extrudiert, wobei die Komponente E über eine geeignete Pumpvorrichtung in die Schmelze eingepumpt wird. Eine weitere besonders bevorzugte Ausführungsform der Erfindung besteht darin, daß die Komponente A oder ein Teil dieser Komponente in einem Extruder aufgeschmolzen wird und in diese Schmelze das Tetrafluorethylen-Polymerisat eingepumpt wird.

Die beschriebenen Verfahren der Einarbeitung des Tetrafluorethylen-Polymerisats vermeiden die Verwendung pulverförmiger Fluorpolymerer und die mit deren Handhabung verbundenen Probleme.

Prinzipiell ist es jedoch auch möglich, das Tetrafluorethylenpolymerisat E als Pulver oder Granulat einzusetzen.

Durch die erfindungsgemäßen Zusammensetzungen wird die Verwendung chlor- und bromhaltiger Flammschutzmittel in ABS-Formmassen vermieden. Überraschenderweise zeichnen sich die erfindungsgemäßen Formmassen durch eine geringe Rauchgasdichte aus. Der Zusatz der Tetrafluorethylenpolymerisats verringert die erforderliche Menge an rotem Phosphor und trägt damit zu einer Verbesserung der mechanischen Eigenschaften von Gegenständen bei, die aus den erfindungsgemäßen Formmassen hergestellt wurden. Darüber hinaus wird durch die Verwendung des Tetrafluorethylenpolymerisats das Abtropfen brennender Formkörper verhindert. Im Gegensatz zu vielen anderen Flammschutzsystemen wird bei den erfindungsgemäßen Formmassen kein Ausblühen oder Ausschwitzen der Flammschutzmittel beobachtet.

Die erfindungsgemäßen Formmassen eignen sich zur Herstellung von Formkörpern, insbesondere auf dem Elektro- und Elektroniksektor. Die Verarbeitung der erfindungsgemäßen Formmassen erfolgt vorzugsweise durch Spritzgießen, Extrudieren, Blasformen oder Tiefziehen.

Die Erfindung wird durch die nachstehend beschriebenen Beispiele näher erläutert. Die in den Beispielen genannten Teile beziehen sich auf das Gewicht.

### Beispiele

Die Flammschutzprüfung erfolgt im vertikalen Brandtest nach den Vorschriften der Underwriter Laboratories zwecks Einordnung in eine der Brandklassen UL 94 VO, V1 oder V2.

Die Einstufung eines flammgeschützten Thermoplasten in die Brandklasse UL 94 VO erfolgt, wenn folgende Kriterien erfüllt sind: Bei einem Satz von 5 Proben der Abmessungen 127 x 12,7 x 3,16 mm dürfen alle Proben nach zweimaliger Beflammung von 10 sek Zeitdauer mit einer offenen Flamme (Höhe 19 mm) nicht länger als 10 sek nachbrennen. Die Summe der Nachbrennzeiten bei 10 Beflammungen von 5 Proben darf nicht größer sein als 50 sek. Es darf kein brennendes Abtropfen, vollständiges Abbrennen oder ein Nachglühen von länger als 30 sek erfolgen. Die Einstufung in die Brandklasse UL 94 V1 erfordert, daß die Nachbrennzeiten nicht länger als 30 sek sind und daß die Summe der Nachbrennzeiten von 10 Beflammungen von 5 Proben nicht größer als 250 sek ist. Das Nachglühen darf nie länger als 60 sek dauern. Die übrigen Kriterien sind identisch mit den oben erwähnten. Eine Einstufung in die Brandklasse UL 94 V2 erfolgt dann, wenn es bei Erfüllung der übrigen Kriterien zur Einstufung UL 94 V1 zu brennendem Abtropfen kommt.

### Herstellung der Komponente A

Durch kontinuierliche Lösungspolymerisation nach einem Verfahren wie es beispielsweise im Kunststoff-Handbuch, Hrsg. Vieweg-Daumiller, Band V (Polystyrol), Carl-Hanser-Verlag, München 1969, Seite 124, Zeilen 12ff, beschrieben ist, wurde ein Copolymerisat von Styrol und Acrylnitril im Gewichtsverhältnis 65/35 mit einer Viskositätszahl (VZ) von 80 ml/g hergestellt.

### Herstellung der Komponente B

Durch Polymerisation von 60 Teilen Butadien in Gegenwart einer Losung von 0,6 Teilen tert.-Dodecylmercaptan, 0,7 Teilen C₁₄-Na-Alkylsulfonat als Emulgator, 0,2 Teilen Kaliumperoxodisulfat und 0,2 Teilen Natriumpyrophosphat in 80 Teilen Wasser wird bei 65°C ein Polybutadienlatex hergestellt. Nach Beendigung der Reaktion wird der Polymerisationsaintoklav entspannt.
Der Umsatz betrug 98 %.

Es wird ein Polybutadien erhalten, dessen mittlere Teilchengröße bei 0,1 µm liegt. Der erhaltene Latex wurde durch Zusatz von 25 Teilen einer Emulsion, eines Copolymeren aus 96 Teilen Ethylacrylat und 4 Teilen Methacrylsäureamid mit einem Feststoffgehalt von 10 Gewichtsteilen agglomeriert, wobei ein Polybutadienlatex mit einer mittleren Teilchengröße von 0,35 µm entstand. Nach Zusetzen von 40 Teilen Wasser, 0,4 Teilen Na-C₁₄-Alkylsulfonat und 0,2 Teilen Kaliumperoxodisulfat wurden 40 Teile einer Mischung aus Styrol und Acrylnitril im Verhältnis von 70:30 innerhalb von 4 Stunden zugeführt. Die Polymerisation erfolgte unter Rühren des Ansatzes bei 75°C. Der Umsatz, bezogen auf Styrol-Acrylnitril war praktisch quantitativ. Die erhaltene Pfropkautschukdispersion wurde mittels Calciumchloridlösung gefällt und das abgetrennte Pfropfmischpolymerisat mit destilliertem Wasser gewaschen.

### Tetrafluorethylenpolymerisat-Batch in Styrol-Acrylnitril-Copolymerisat

In einem Zweiwellenextruder der Fa. Werner & Pfleiderer wurde das Styrol/Acrylnitril-Copolymere A aufgeschmolzen und eine handelsübliche, wäßrige Tetrafluorethylenpolymer-Dispersion in die Schmelze eingepumpt. Entlang des Extruders wurde das Wasser abgezogen. Die Schmelze wird als Strang ainsgepreßt, durch ein Wasserbad gezogen und granuliert. Das Granulat enthielt 2 Gew.-% Fluorpolymer.

### Beispiel 1

Die vorstehend angegebenen Vorprodukte und Zusatzstoffe wurden in trockener Form in einem Fluidmischer gemischt:
42,5 Teile Styrol/Acrylnitril-Copolymerisat (Komponente A)
22,5 Teile Pfropfpolymerisat aus Butadien, Styrol und Acrylnitril (Komponente B)
10 Teile roter Phosphor
10 Teile Melamin
15 Teile Tetrafluorethylenpolymerisat-Batch in Styrol/Acrylnitril-Copolymerisat
3 Teile Triphenylphosphat
Das Gemisch wurde bei 230°C auf einem Doppelschneckenextruder (ZSK 53 der Fa. Werner & Pfleiderer) extrudiert. Aus dem getrockneten Granulat der Proben wurden durch Spritzguß Formkörper für die Flammschutzprüfung (Brandstäbe mit 1/8" Dicke) hergestellt. Die Prüfung von 5 Brandstäben im vertikalen Brandtest lieferte folgende Ergebnisse:

| Probekörper Nr. | Brandzeit [s] | |
|---|---|---|
| | 1. Beflammung | 2. Beflammung |
| 1 | 2 | 4 |
| 2 | 2 | 2 |
| 3 | 1 | 3 |
| 4 | 1 | 2 |
| 5 | 2 | 4 |

Es fand weder ein Abtropfen noch ein Nachglühen statt.

### Beispiel 2

Analog zu Beispiel 1 wurde eine Formmasse aus folgenden Komponenten hergestellt:
22,5 Teile Styrol/Acrylnitril-Copolymerisat (Komponente A)
22,5 Teile Pfropfpolymerisat aus Butadien, Styrol und Acrylnitril (Komponente B)
20 Teile roter Phosphor
20 Teile Melamincyanurat
15 Teile Tetrafluorethylenpolymerisat-Batch in Styrol/Acrylnitril-Copolymerisat (Herstellung siehe oben)
3 Teile Triphenylphosphat
Die Brandprüfung lieferte folgende Ergebnisse:

| Probekörper Nr. | Brandzeit [s] | |
|---|---|---|
| | 1. Beflammung | 2. Beflammung |
| 1 | 11 | 11 |
| 2 | 12 | 10 |
| 3 | 11 | 12 |
| 4 | 12 | 12 |
| 5 | 12 | 12 |

Es fand weder ein Abtropfen noch ein Nachglühen statt.

### Beispiel 3

In einem Fluidmischer wurde ein Gemisch aus folgenden Vorprodukten und Zusatzstoffen hergestellt:
47,5 Teile Styrol/Acrylnitril-Copolymerisat (Komponente A)
22,5 Teile Pfropfpolymerisat aus Butadien, Styrol und Acrylnitril (Komponente B)
15 Teile roter Phosphor
15 Teile Melamin
3 Teile Triphenylphosphat
Das Gemisch wird in einem Zweischneckenextruder ZSK 53 der Firma Werner & Pfleiderer) aufgeschmolzen. In die Schmelze wurde eine wäßrige Dispersion des Tetrafluorethylenpolymerisats eingepumpt. Die Dosiergeschwindigkeit wurde so gewählt, daß im Produkt ein Fluorgehalt von 0,22 Gew.-% resultierte. Das Wasser wurde entlang des Extruders abgezogen. Die Schmelze wurde als Strang ausgepreßt, durch ein Wasserbad gezogen und granuliert. Die Brandprüfung gab folgende Ergebnisse:

| Probekörper Nr. | Brandzeit [s] | |
|---|---|---|
| | 1. Beflammung | 2. Beflammung |
| 1 | 3 | 7 |
| 2 | 4 | 8 |
| 3 | 3 | 6 |
| 4 | 5 | 15 |
| 5 | 5 | 19 |

Es wurde weder Abtropfen noch Nachglühen beobachtet.

### Beispiel 4

Analog zu Beispiel 1 wurde in einem Fluidmischer ein Gemisch aus folgenden Vorprodukten und Zusatzstoffen hergestellt:
37,5 Teile Styrol/Acrylnitril-Copolymerisat (Komponente A)
22,5 Teile Pfropfpolymerisat aus Butadien, Styrol und Acrylnitril (Komponente B)
20 Teile roter Phosphor
20 Teile Melamin
3 Teile Triphenylphosphat
0,5 Teile wäßrige Dispersion von Polytetrafluorethylen (Feststoffgehalt: 60 Gew.-%)
Das Gemisch wurde bei 230°C auf einem Doppelschneckenextruder (ZSK 53 der Fa. Werner & Pfleiderer) extrudiert. Die Herstellung der Probekörper erfolgte wie in Beispiel 1. Die Brandprüfung lieferte folgende Ergebnisse:

| Probekörper Nr. | Brandzeit [s] | |
|---|---|---|
| | 1. Beflammung | 2. Beflammung |
| 1 | 15 | 3 |
| 2 | 20 | 7 |
| 3 | 15 | 5 |
| 4 | 14 | 14 |
| 5 | 18 | 9 |

Es fand weder ein Abtropfen noch ein Nachglühen statt.

### Beispiel 5

Analog zu Beispiel 1 wurde eine Formmasse aus folgenden Vorprodukten und Zusatzstoffen hergestellt:
32,5 Teile Styrol/Acrylnitril-Copolymerisat (Komponente A)
22,5 Teile Pfropfpolymerisat aus Butadien, Styrol und Acrylnitril (Komponente B)
10 Teile roter Phosphor
20 Teile Polyhexamethylenadipamid (Polyamid-6,6; Ultramid A3 der BASF)
15 Teile Tetraflinorethylenpolymerisat-Batch in Styrol/Acrylnitril-Copolymerisat
3 Teile Triphenylphosphat
Die Brandprüfung lieferte folgende Ergebnisse:

| Probekörper Nr. | Brandzeit [s] | |
|---|---|---|
| | 1. Beflammung | 2. Beflammung |
| 1 | 4 | 12 |
| 2 | 5 | 13 |
| 3 | 6 | 14 |
| 4 | 6 | 16 |
| 5 | 5 | 11 |

Es fand weder ein Abtropfen noch ein Nachglühen statt.

## Patentansprüche

1. Formmasse aus
mindestens 35 Gew.-% eines Styrol-Acrylnitril-Copolymerisates A;
5 - 60 Gew.-% eines Pfropfpolymerisats B, hergestellt durch Pfropfung einer Mischung aus Styrol und Acrylnitril auf einen Dien- oder Acrylatkautschuk;
5 - 25 Gew.-% rotem Phosphor C;
5 - 25 Gew.-% einer stickstoffhaltigen Verbindung D;
0,05 - 1 Gew.-% eines teilchenförmigen Tetrafluorethylen-Polymerisats E sowie
0 - 10 Gew.-% einer Phosphorverbindung F.

2. Formmasse nach Anspruch 1, dadurch gekennzeichnet, daß als stickstoffhaltige Verbindung D ein Polyamid verwendet wird.

3. Formmasse nach Anspruch 1, dadurch gekennzeichnet, daß als stickstoffhaltige Verbindung D ein Triazin-Derivat verwendet wird.

4. Formmasse nach Anspruch 1, dadurch gekennzeichnet, daß als stickstoffhaltige Verbindung D Melamin verwendet wird.

5. Formmasse nach Anspruch 1, dadurch gekennzeichnet, daß als Tetraflinorethylen-Polymerisat E eine mittlere Teilchengröße von 0,05 bis 1 µm aufweist.

6. Formmasse nach Anspruch 1, dadurch gekennzeichnet, daß als Tetraflinorethylen-Polymerisat E einen Fluorgehalt von 70 bis 76 Gew.-% aufweist.

7. Formmasse nach Anspruch 1, dadurch gekennzeichnet, daß 0,5 bis 5 Gew.-% der Phosphorverbindung F verwendet werden.

## Claims

1. A molding material comprising
at least 35% by weight of a styrene-acrylonitrile copolymer A,
5 - 60% by weight of a graft polymer B, prepared by grafting a mixture of styrene and acrylonitrile onto a diene or acrylate rubber,
5 - 25% by weight of red phosphorus C,
5 - 25% by weight of a nitrogen-containing compound D,
0.05 - 1% by weight of a particulate tetrafluoroethylene polymer E and
0 - 10% by weight of a phosphorus compound F.

2. A molding material as claimed in claim 1, wherein the nitrogen-containing compound D is a polyamide.

3. A molding material as claimed in claim 1, wherein the nitrogen-containing compound D is a triazine derivative.

4. A molding material as claimed in claim 1, wherein the nitrogen-containing compound D is melamine.

5. A molding material as claimed in claim 1, wherein the tetrafluoroethylene polymer E has an average particle size of from 0.05 to 1 µm.

6. A molding material as claimed in claim 1, wherein the tetrafluoroethylene polymer E has a fluorine content of from 70 to 76% by weight.

7. A molding material as claimed in claim 1, wherein from 0.5 to 5% by weight of the phosphorus compound F is used.

## Revendications

1. Masse de moulage constituée
d'au moins 35% en poids d'un copolymère A de styrèneacrylonitrile;
de 5 à 60% en poids d'un polymère greffé B préparé par greffage d'un mélange de styrène et d'acrylonitrile sur un caoutchouc diénique ou d'acrylate;
de 5 à 25% en poids de phosphore rouge C;
de 5 à 25% en poids d'un composé azoté D; de 0,05 à 1% en poids d'un polymère de tétrafluoréthylène particulaire E, ainsi que
de 0 à 10% en poids d'un composé phosphoré F.

2. Masse de moulage selon la revendication 1, caractérisée en ce que, comme composé azoté D, on utilise un polyamide.

3. Masse de moulage selon la revendication 1, caractérisée en ce que, comme composé azoté D, on utilise un dérivé de triazine.

4. Masse de moulage selon la revendication 1, caractérisée en ce que, comme composé azoté D, on utilise la mélamine.

5. Masse de moulage selon la revendication 1, caractérisée en ce que le polymère de tétrafluoréthylène E présente une granulométrie moyenne de 0,05 à 1 µm.

6. Masse de moulage selon la revendication 1, caractérisée en ce que le polymère de tétrafluoréthylène E présente une teneur en fluor de 70 à 76% en poids.

7. Masse de moulage selon la revendication 1, caractérisée en ce qu'on utilise de 0,5 à 5% en poids du composé phosphoré F.
